# EUROPÄISCHE PATENTSCHRIFT

(11) **EP 1 856 680 B1**
(45) Veröffentlichungstag und Bekanntmachung des Hinweises auf die Patenterteilung: **06.08.2008**
(21) Anmeldenummer: 06707237.1
(22) Anmeldetag: 24.02.2006
(51) Int. Cl.: G08G 1/02, G08G 1/017, G01G 19/02

(54) **VERFAHREN UND ANLAGE ZUR ERMITTLUNG UND ÜBERWACHUNG DES BELADUNGSZUSTANDES VON KRAFTFAHRZEUGEN IM FLIESSENDEN VERKEHR UND ZUR FALLWEISEN EICHFÄHIGEN NACHWÄGUNG VON ÜBERLADENEN KRAFTFAHRZEUGEN**
METHOD AND INSTALLATION FOR DETERMINING AND MONITORING THE LOADING STATE OF MOTOR VEHICLES IN THE MOVING TRAFFIC AND FOR THE CASE-BY-CASE STANDARDISABLE POST-WEIGHING OF OVERLOADED MOTOR VEHICLES
PROCEDE ET INSTALLATION POUR DETERMINER ET CONTROLER L'ETAT DE CHARGE D'AUTOMOBILES DANS UN TRAFIC EN CIRCULATION ET POUR PESER POSTERIEUREMENT AU CAS PAR CAS, DE MANIERE ADAPTEE A UN ETALONNAGE, DES AUTOMOBILES EN SURCHARGE

(30) Priorität: 08.03.2005 DE 102005010652; 22.11.2005 DE 102005055663
(43) Veröffentlichungstag der Anmeldung: 21.11.2007
(73) Patentinhaber: Wingtec GmbH, 76227 Karlsruhe (DE)
(72) Erfinder: PIETZSCH, Ludwig, 76227 Karlsruhe (DE)
(74) Vertreter: Liesegang, Roland
(86) Internationale Anmeldenummer: PCT/EP2006/001693
(87) Internationale Veröffentlichungsnummer: WO 2006/094652

(56) Entgegenhaltungen:
- US-A1- 2004 021 579
- R.THOMAS,C.BELL,D.TRISCHUK,C.BERTHELOT,A.B ERGAN: "Oregon green light: A network pre-clearance weigh station case study" INTERNATIONAL ROAD FEDERATION PROCEEDINGS, [Online] Februar 2001 (2001-02), XP002383506 Paris Gefunden im Internet: URL:http://www.engr.usask.ca/tc/publicatio ns/pdf/irforegongreenlightv7finalpostedpdf .pdf> [gefunden am 2001-02] -& OREGON DEPARTMENT OF TRANSPORTATION: "Green light weigh station preclearance"[Online] 31. Mai 2006 (2006-05-31), XP002383507 Gefunden im Internet: URL:http://www.oregon.gov/ODOT/MCT/GREEN.s html> [gefunden am 2006-05-31]
- C.A. BELL,B.MCCALL,C.M.WALTON: "The Oregon "Green light" CVO project"[Online] September 1996 (1996-09), XP002383508 Corvallis Gefunden im Internet: URL:http://www.oregon.gov/ODOT/MCT/docs/re port6.pdf> [gefunden am 2006-09]
- A.KISHORE,R.KLASHINSKY: "Prevention of highway infrastructure damage through commercial vehicle weight enforcement" ANNUAL INDIAN ROADS CONGRESS SESSION, [Online] 7. November 2000 (2000-11-07), XP002383509 Calcutta, India Gefunden im Internet: URL:http://www.irdinc.com/library/pdf/prev ention_infrastructure_damage.pdf> [gefunden am 2000-11]

## Beschreibung

Die Erfindung betrifft ein Verfahren und eine Anlage zur Ermittlung und Überwachung des Beladungszustandes von Kraftfahrzeugen im fließenden Verkehr und zur fallweisen eichfähigen Nachwägung von überladenen Kraftfahrzeugen.

Es ist bekannt, Achslasten von Kraftfahrzeugen eichfähig an Kontrollstationen oder nicht eichfähig dynamisch im fließenden Verkehr zu messen (EP 0 166 168 B1, DE-OS 2 263 145).

Eine dynamische Achslastmessung ermöglicht die Ermittlung der Belastung von Verkehrswegen ohne Beschränkung der Fahrgeschwindigkeit (WIM = Weighing in Motion). Eine solche Achslastmessung ist bisher für höhere Geschwindigkeiten > 10 km/h noch nicht eichamtlich zugelassen. Daher muß für eine belastbare Überprüfung des Beladungszustandes von Kraftfahrzeugen ein statisches, oder langsam dynamisches eichfähiges Wägen an Kontrollstellen vorgenommen werden.

Ein eichfähiges Wägen an Kontrollstellen erfordert das stichprobenartige Ableiten einer zufällig zusammengestellten Gruppe von Lastkraftwagen (LKW) von einem Verkehrsweg, wie einer Autobahn, und ein Kontrollieren mittels Personals, das hierfür statische Rad- und/oder langsam dynamische Achslastmesser einsetzt. Hierbei werden Gruppen von wahllos abgeleiteten LKW überprüft, also auch unbeladene oder nicht überladene LKW. Dabei ist die Trefferquote zum Herausfinden und gegebenenfalls Bestrafen von überladenen LKW (80 % bis 90 % sind in der Regel nicht überladen) gering, was zur Folge hat, daß gesetzliche Vorgaben bezüglich der Beladung häufig nicht eingehalten werden. Dies führt zu Verkehrsgefährdung und Unfällen und zu vermeidbaren Straßenschäden.

Mit dem in Deutschland zu Beginn des Jahres 2005 eingeführten Mauterhebungs-System, dem sogenannten Toll-Collect System (TC-System), läßt sich lediglich die Anzahl der mautpflichtigen LKW erfassen und kontrollieren, ob für die erfaßten LKW ordnungsgemäß eine Maut bezahlt worden ist. Beladungszustände der LKW werden mit dem Mauterhebungs-System nicht erfaßt.

Der Schutz von Straßen durch die Ermittlung und Ahndung der überladenen LKW auf den Straßen ist seit Jahren von großem Interesse für die Besitzer der Verkehrswege, in aller Regel den Staat. In den USA hat man dafür bundesweit mit über 400 Weigh Stations eine teure, zusätzliche Infrastruktur geschaffen. Jede Station besteht neben dem Wiegeplatz aus einer mehrere Kilometer langen, von dem Highway separat geführten Einlaufspur (Ramp), auf der alle LKW bis vor kurzem bei Betrieb der Weigh Station von den Hauptspuren des Highways einbiegen müssen, um dort bei stark reduzierter Geschwindigkeit (20-30 miles per hour) mit dynamischen Achslastwaagen vorverwogen zu werden. Im Falle einer vermuteten Überladung müssen die LKW in den Wiegeplatz einbiegen und werden dort eichfähig genau verwogen. Die nicht als überladen in Frage kommenden LKW dürfen ihre Fahrt auf dem Highway fortsetzen. Die entsprechende Information wird den Autofahrern über eine grüne oder rote Ampel signalisiert. Da diese Ampeln fahrzeugspezifisch geschaltet werden, muss auch aus diesem Grunde die Geschwindigkeit des LKW niedrig sein.

Neuerdings können sich auf freiwilliger Basis LKW vor Benutzung des Highways überprüfen lassen und einen "Pre-Pass" lösen, der mit Hilfe eines Transponders dafür sorgt, daß diese LKW in der Regel ein grünes Signal erhalten und damit nicht zur Verwägung in den Prüfplatz einfahren müssen. Am Pre-Pass-Programm nehmen bisher ca. 2-5% aller LKW in den USA teil. 95% aller Fahrzeuge müssen hingegen über die Langsamspur fahren, werden dort dynamisch verwogen, und werden dann ggf. zum Messplatz verwiesen. Nach der US-Patentanmeldung 2004/0021579 kann dieser Screening-Vorgang auch zweifach durchgeführt werden, um eine höhere Screening-Genauigkeit zu erzielen (einmal in der Hauptspur und einmal in der Einlaufspur).

Die US-Patentanmeldung 2004/0021579 A1 beschreibt ein System zur Überwachung der Beladung von Kraftfahrzeugen im Verkehr, das auf der PrePass-Technik beruht und diese weiterentwickelt. Das System arbeitet mit dynamischen und statischen Wägestationen. Es setzt voraus, daß vor der Abzweigung zu einer statischen Wägestation eine dynamische Wägestation in die rechte Fahrspur eines Highways integriert ist. Wenn ein mit einem PrePass-Transponder ausgestattetes Fahrzeug sich dieser dynamischen Wägestation nähert, wird es erkannt und gewogen. Wenn es sein registriertes Gesamtgewicht nicht überschreitet, wird ein Signal gesetzt, das dem Fahrzeug signalisiert, daß es die statische Wägestation passieren kann. Wenn der Fahrer ein rotes Signal und ein dazu gehöriges Tonsignal empfängt oder sein Fahrzeug keinen Transponder hat, muß das Fahrzeug in die Ramp zur statischen Wägestation einfahren. Gemäß der US 2004/0021579 A1 wird in der Zufahrt zu der statischen Wägestation nochmals eine dynamische Messung bei verminderter Geschwindigkeit durchgeführt, und das Kraftfahrzeug wird dann, wenn bei dieser zweiten dynamischen Wägung festgestellt wird, daß es sein registriertes Gesamtgewicht nicht überschreitet, auf dem Highway zurückgeleitet, ohne daß es sich der statischen Wägung unterziehen muß.

Das PrePass-System hat mehrere Nachteile. Zunächst erfordert es die Vorabregistrierung, Zertifizierung und Überprüfung sämtlicher Fahrzeuge, die an dem PrePass-System teilnehmen wollen. Fahrzeuge, die nicht mit dem PrePass-Transponder ausgestattet sind (derzeit mehr als 95%), müssen in jedem Fall in die statischen Wägestationen einfahren. Somit fahren sämtliche Lastkraftwagen, die nicht mit einem PrePass-Transponder ausgestattet sind, sowie sämtliche Lastkraftwagen, die an dem PrePass-System teilnehmen und bei denen dennoch eine Überlast festgestellt wurde, in eine nachgeschaltete statische Wägestation, und zwar unabhängig davon, ob diese Wägestation Kapazität zum Aufnehmen weiterer Lastkraftwagen hat. Dies führt in der Praxis dazu, daß sich in den Ramps zu den Wägestationen lange Schlangenvon mehrheitlich nicht überladenen LKW bilden, was volkswirtschaftlich einen hohen Kostennachteil bedeutet.

Auch wäre das System der USA in Europa nicht nachrüstbar, weil die benötigte Infrastruktur sehr teuer würde und in der Regel kein Gelände für eine separate nachrüstbare Einlaufspur, einschliesslich Wiegeplatz, vorhanden ist. Schliesslich ist das Wägekontrollsystem in den USA mit den niedrigen Verkehrsflussgeschwindigkeiten und dem Staueffekt, der auch die 80 % - 90 % der nicht überladenen LKW betrifft, schon an sich nicht optimal.

Noch unbefriedigender ist die derzeitige europäische Lösung, bei der willkürlich stichprobenartig herausgegriffene LKW ohne vorheriges Screening durch entsprechend autorisiertes Personal auf Parkplätzen verwogen werden. Diese Messungen sind ohne nennenswerten Erfolg und betreffen nurmehr wenige Promille aller in Frage kommender LKW. Daher konnte bisher nicht verhindert werden, daß zwischen 10% und 20% aller LKW weiterhin überladen werden.

Der Erfindung liegt die Aufgabe zugrunde, ein Verfahren und eine Anlage zur Überwachung des Beladungszustandes von Kraftfahrzeugen, insbesondere LKW, zu schaffen, die im Falle von Überladungen eine sehr hohe Treffsicherheit beim Auffinden von überladenen Kraftfahrzeugen gewährleisten, den Anreiz bzw. Druck auf die Fahrer und Halter der Kraftfahrzeuge, Beladungsvorschriften einzuhalten, deutlich erhöhen und gleichzeitig eine gänzliche Eliminierung oder zumindest eine drastische Verminderung überflüssiger eichfähiger Kontrollen (statisch oder langsam dynamisch) von leer fahrenden oder ordnungsgemäß beladenen Kraftfahrzeugen bewirken sollen.

Zur Lösung dieser Aufgabe dienen ein Verfahren nach Anspruch 1 und eine Anlage nach Anspruch 17.

Vorteilhafte Ausgestaltungen der Erfindung sind in den Unteransprüchen unter Schutz gestellt.

Die Erfindung sieht ein zweistufiges System vor, bei dem zunächst an einer Meßstation der Beladungszustand eines Kraftfahrzeuges dynamisch erfaßt wird und dem Führer des Kraftfahrzeuges gegebenenfalls eine vermutete Überladung des Fahrzeuges signalisiert und das Fahrzeug entsprechend markiert wird (Fahrerinformationssystem oder Subsystem 1). An einer nachgeschalteten, optionalen Kontrollstelle können z.B. mittels eines mobilen Transceivers markierte Fahrzeuge erfaßt und es kann ihnen signalisiert werden, daß sie eine nächstgelegene Kontrollstation anfahren müssen (Kontrollsystem oder Subsystem 2). Zu diesem Zweck werden ein erstes und ein zweites optisches oder akustisches Signal umgeschaltget. Das erste optische Signal kann beispielsweise ein grünes Licht in ein gelbes Licht umschalten, und das zweite optische Signal kann das gelbe Licht in ein rotes Licht umschalten. Zusätzlich oder alternativ können entsprechende Textmeldungen oder Warntöne ausgegeben werden. Das erfindungsgemäße System hat den Vorteil, daß nicht automatisch sämtliche Kraftfahrzeuge, für die eine voraussichtliche Überladung ermittelt wurde, eine entsprechende Kontrollstation anfahren. Durch die nachgeschalteten mobilen Transceiver an der Kontrollstelle kann die Anzahl der Fahrzeuge, welche in die Kontrollstation einfahren müssen, abhängig von deren Kapazität reguliert werden. Die Kraftfahrzeuge werden zweckmäßig an der Kontrollstelle nur dann erfaßt und mit dem zweiten Signal markiert, wenn die Kontrollstation geöffnet ist und Kapazität zum Überprüfen weiterer Fahrzeuge hat. Ist die Kontrollstation ausgelastet, so können alle Fahrzeuge passieren. Gleichwohl hat bereits die erste Stufe des erfindungsgemäßen Systems, d.h. die Benachrichtigung des Fahrzeugführers mit dem ersten Signal, eine Warnfunktion, die den Fahrzeugführer auf eine vermutete Überladung hinweist, so daß dieser gegebenenfalls geeignete Maßnahmen treffen kann.

Das Verfahren nach der Erfindung läßt sich im 24-Stunden-Betrieb unabhängig von Witterung und Tageszeit durchführen. Dies ist ein besonders bedeutsamer Vorteil, der das erfindungsgemäße interaktive Zusammenwirken zwischen den Komponenten im Fahrzeug und an den Meß- und Kontrollstellen sowie den Kontrollstationen zur Voraussetzung hat.

Die Erfindung hat auch den Vorteil, daß sie unter Nutzung von an Autobahnen vorhandener Infrastruktur umgesetzt werden kann. Insbesondere kann die Kontrollstation zur statischen Wägung der Kraftfahrzeuge auf vorhandenen Parkplätzen eingerichtet werden, weil die Anzahl der zu überprüfenden Kraftfahrzeuge an der Kontrollstelle reguliert werden kann. Es sind daher nicht, wie bei den aus den USA bekannten Systemen, eigene Wägestationen mit einer mehrere kilometerlangen Wartespur notwendig.

Zweckmäßigerweise sollten sämtliche Kraftfahrzeuge, insbesondere Lastkraftwagen (im folgenden "LKW" genannt), die auf einem bestimmten Gebiet verkehren, beispielsweise in der Bundesrepublik Deutschland, mit Transponder-Systemen ausgestattet werden, die eine Teilnahme an dem erfindungsgemäßen System ermöglichen. Wenn dies gewährleistet ist, kann bei einer geeigneten Verteilung der Meß- und Kontrollstellen, beispielsweise 300 Meßstellen (150 Meßstellen je Fahrtrichtung) in dem deutschen Autobahnnetz, der Güterverkehr fast vollständig überwacht werden, wobei durch die dynamische Überwachung des fließenden Verkehrs eine Vorauswahl voraussichtlich überladener Lastkraftwagen getroffen werden kann, die die Treffsicherheit beim Auffinden von tatsächlich überladenen Kraftfahrzeugen gegenüber stichprobenartigen Messungen drastisch erhöht.

Vorzugweise werden von den Kraftfahrzeugen Kenndaten, wie Kennzeichen, Fahrzeugcode bzw. -typ, Achszahl etc., an die Meßstelle übermittelt, und die Meßwerte für die Rad- und/oder Achslast eines Kraftfahrzeuges werden diesen Daten hinzugefügt. Dadurch erhöht sich die Geschwindigkeit bei der Ermittlung eines voraussichtlichen Überladungszustandes. Ferner werden vorzugsweise die Meßdaten und fahrzeugspezifische Kenndaten, sowie eine Kennung der Meßstation und der Meßzeitpunkt kombiniert, in dem Fahrzeug selbst gespeichert und an einen Zentralrechner gesendet, in dem sie ebenfalls gespeichert werden. Dadurch ist es möglich, Kraftfahrzeuge zu erfassen, die wiederholt bei der dynamischen Messung ihr zulässiges Gesamtgewicht überschreiten. Solche Fahrzeuge können gezielt beobachtet und überprüft werden.

An den Kontrollstellen werden die Kraftfahrzeuge vorzugsweise zusätzlich zur elektronischen Erfassung und Markierung fotographiert, um Fahrzeuge, welche die Kontrollstation verbotswidrig passieren, später gerichtlich belangen zu können.

Auch die fahrzeugspezifischen Kenndaten von mit dem zweiten Signal markierten Kraftfahrzeugen sollten im Fahrzeug gespeichert und an den Zentralrechner gesendet werden, um diese Fahrzeuge in einem zentralen Register zu erfassen.

In der bevorzugten Ausführung der Erfindung werden die den betreffenden Kraftfahrzeugen zugeordneten Markierungen erst nach Ablauf einer vorgegebenen Zeitspanne automatisch gelöscht. Diese Zeitspanne sollte so bemessen sein, daß es für einen Fahrzeugführer unwirtschaftlich wäre, zwischen dem Passieren der Meßstelle, bei der sein Fahrzeug markiert wurde, und der nachfolgenden Kontrollstation eine Pause einzulegen, bei der er auf das Erlöschen der Markierung wartet. Ferner sollte die Zeitspanne für die Markierung so bemessen sein, daß die Markierung in der Regel erloschen ist, bevor der Lastkraftwagen das nächste Mal ent- und beladen wurde. Eine Zeitspanne von etwa zwei bis fünf Stunden, insbesondere etwa drei Stunden erscheint zweckmäßig. Auch das Erlöschenlassen der Markierung abhängig von einer zurückgelegten Wegstrecke, z.B. 200 km, ist möglich. Durch eine geeignete Wahl der Zeitspanne oder Wegstrecke kann auch erreicht werden, daß ein markiertes Kraftfahrzeug, welches eine geschlossene oder überlastete Kontrollstelle passiert, bei einer nachfolgenden Kontrollstelle gleichwohl erfaßt wird.

In einer weiteren Ausführung der Erfindung werden die dem betreffenden Kraftfahrzeug zugeordneten Markierung jeweils nur von oder mit Genehmigung von befugtem Personal gelöscht. Ein Erfassen besagter Kenndaten ist jedoch keine zwingende Voraussetzung für das grundsätzliche Funktionieren des erfindungsgemäßen Verfahrens.

In der bevorzugten Ausführung der Erfindung ist ferner vorgesehen, daß ein Fahrzeug, bei dem eine Überladung in einer Kontrollstation verifiziert und erfaßt wurde, wobei die Überladung jedoch nicht so gravierend ist, daß sie das Fahrzeug an der Weiterfahrt hindern würde, entsprechend mit einem dritten Signal markiert wird, so daß das betreffende Fahrzeug an nachfolgenden Kontrollstellen nicht erneut markiert und zum Einfahren in eine weitere Kontrollstation aufgefordert wird, sondern seine Fahrt bestimmungsgemäß beenden kann.

In einer Ausführung der Erfindung wird das erfindungsgemäße Verfahren in Verbindung mit Toll Collect-Brücken eingesetzt, um die Meßdaten und die fahrzeugspezifischen Daten zur Maut-Berechnung heranzuziehen.

Die Erfindung sieht auch eine Anlage zur Durchführung des oben beschriebenen Verfahrens vor. Diese Anlage umfaßt in die Fahrbahn des Verkehrsweges verlegte Wiegesensoren zum Erfassen von Rad- und /oder Achslasten der die Meßstelle passierenden Kraftfahrzeuge; einen an jeder Meßstelle installierten Lokalrechner zum Auswerten und Wandeln der Meßdaten in erste Markierungssignale; eine entlang des Verkehrsweges angeordnete, mit dem Lokalrechner gekoppelte erste Kommunikations-Einheit zum Senden der ersten Markierungssignale; eine in jedem Kraftfahrzeug installierte Registrier- und Warneinheit zum Aufzeichnen und Anzeigen der von der Kommunikations-Einheit gesendeten Markierungssignale. Die Registrier- und Warneinheit sollte mit einem Transponder ausgestattet und vorzugsweise in jedem innerhalb eines bestimmten Verkehrsnetzes verkehrenden LKW vorgesehen sein. Die Anlage umfaßt ferner eine an der Kontrollstelle angeordnete zweite Kommunikations-Einheit, die von der Registrier- und Warneinheit ein Statussignal erhält und abhängig von dem Statussignal gegebenenfalls ein zweites Markierungssignal sendet. Die an der Kontrollstelle eingerichtete Kommunikations-Einheit kann so programmiert werden, daß sie nur eine gewünschte Anzahl von LKW mit dem zweiten Markierungssignal markiert, beispielsweise von "gelb" auf "rot" schaltet.

In einer bevorzugten Ausführung der Erfindung umfaßt die erste Kommunikations-Einheit einen Transceiver, der mit Abstand in Fahrtrichtung hinter der Meßstelle am Rande des Verkehrsweges angeordnet ist. Der Abstand sollte so bemessen werden, daß die Zeitspanne zwischen Passieren der Meßstelle und nachfolgendem Passieren der Kommunikations-Einheit zum Verarbeiten der Meßdaten in dem Lokalrechner sowie Bilden und Senden der Signale zur Registrier- und Warneinheit ausreichend ist.

Weiterhin ist bevorzugt, daß die Kommunikations-Einheit von einen weiteren Transceiver aufweist, bei dem sich jeder mit einem Transponder ausgestattete LKW anmeldet. Für diese Anmeldung sendet der LKW beispielsweise sein Kennzeichen und ein Fahrzeugcode, der den Fahrzeugtyp identifiziert. Aufgrund dieser Information kann der Lokalrechner auf einfache Weise die zulässigen Rad- und/oder Achslast des LKW ermitteln und mit den Meßergebnissen vergleichen.

In der bevorzugten Ausführung ist ferner ein Toleranzpegel für die Überschreitung zulässiger Werte der Rad- und/oder Achslasten der LKW im Lokalrechner programmierbar. Beispielsweise kann in einer Einführungsphase des erfindungsgemäßen Systems der Toleranzpegel für die Meldung der Überschreitung des zulässigen Gewichtes auf 110 % dieses Gewichtes eingestellt werden, um zu vermeiden, daß zu viele LKW mit dem ersten Signal markiert werden. Dieser Toleranzpegel kann dann allmählich gesenkt werden.

Die Registrier- und Warneinheit kann ein Lesegerät für eine Chipkarte zur Identifizierung des Fahrers bzw. des Fahrzeuges enthalten. Sie weist ferner zweckmäßig ein Display mit einer optischen Anzeigelampe auf, welche im Falle eines Überladungszustandes über die erste Kommunikations-Einheit aktiviert wird.

Gemäß einem weiteren Aspekt der Erfindung können die Meßstellen in der Fahrspur durch Verwendung von Referenzachsen als Eichnormal ständig nachgeeicht werden.

Die Erfindung ist im folgenden anhand schematischer Zeichnungen an Ausführungsbeispielen mit weiteren Einzelheiten näher erläutert. Es zeigen:
- Fig. 1: eine perspektivische Darstellung eines Autobahnabschnittes, der mit einer Meßstation einer Anlage gemäß der Erfindung ausgerüstet ist;
- Fig. 2: die Teilansicht einer Fahrerkabine eines LKW, in die ein Registrier- und Warngerät einer Anlage gemäß der Erfindung eingebaut ist;
- Fig. 3: eine perspektivische Darstellung eines Autobahnabschnitts, der mit einer Kontrollstation einer Anlage gemäß der Erfindung ausgerüstet ist;
- Fig. 4: eine schematische Darstellung der Meßstation der erfindungsgemäßen Anlagen; und
- Fig. 5: eine schematische Darstellung der Kontrollstation der erfindungsgemäßen Anlage.

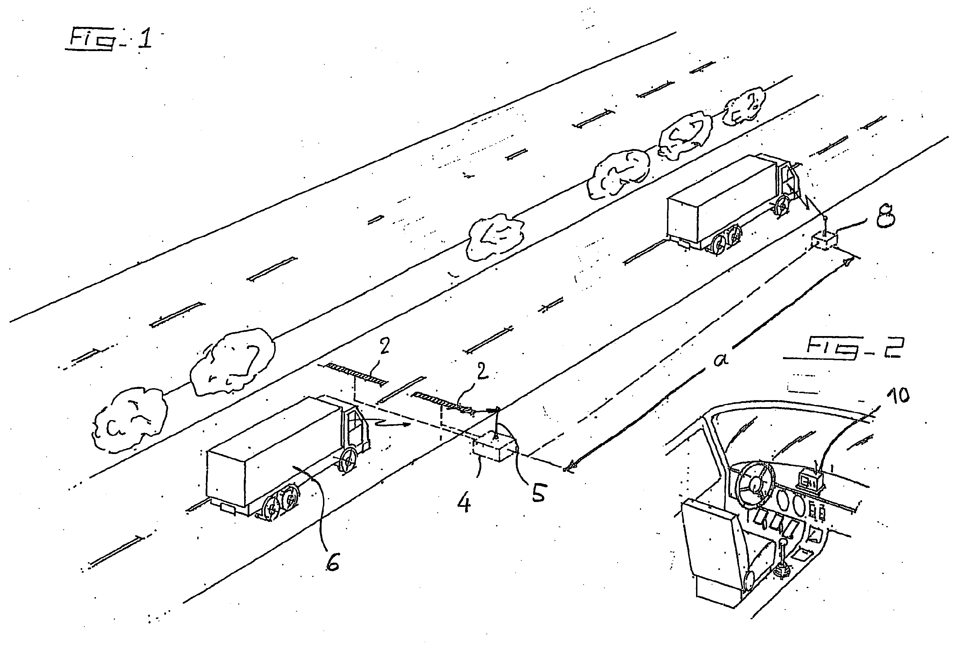

Bei der in Fig. 1 gezeigten Anlage sind in einer oder mehreren Fahrspuren des gezeigten Autobahnabschnittes Wiegesensoren, z. B. Wiegeplatten 2 eingebaut, die ein dynamisches Erfassen der Achslast von Kraftfahrzeugen, wie Lastkraftwagen 6, ermöglichen. Der Aufbau solcher Wiegeplatten ist beispielsweise aus der EP 0 166 168 B1 oder der DE-OS 2 263 145 bekannt und deshalb hier nicht nochmals im einzelnen beschrieben.

Die Wiegeplatten 2 sind mit einem zugehörigen Lokalrechner 4 verbunden, der seitlich neben der Fahrbahn angeordnet ist. Wenn ein LKW 6 die Wiegeplatte 2 in seiner Fahrspur überfährt, werden somit seine Rad- und/oder Achslasten gemessen und im Lokalrechner auf zulässige Achslast, zulässige Achsgruppenlast, zulässiges Gesamtgewicht und Unbalanz (aufgrund verschobener Ladung) umgerechnet. In Fahrtrichtung gesehen mit Abstand a hinter dem Lokalrechner 4 ist eine Kommunikations-Einheit, beispielsweise mit einem Transceiver 8, neben oder über der Fahrbahn angeordnet. Der Abstand a ist so bestimmt, daß die Zeitspanne zwischen Überfahrzeitpunkt der Wiegeschwelle 2 und Passierzeit des Transceiver 8 auch bei Maximalgeschwindigkeit des LKW ausreichend für den Lokalrechner 4 zum Berechnen und Übermitteln des Rechenergebnisses an den Transceiver 8 bemessen ist. Der Transceiver 8 kann per Funk mit einer Registrier- und Warn-Einheit (RWE) 10 kommunizieren, die in jedem LKW erfindungsgemäß eingebaut ist. Die RWE 10 umfaßt einen Transponder oder eine andere Sende-Empfangs-Einheit, einen Datenspeicher, in welchem Ort und Zeitpunkt der Initiierung eines Warnsignals registriert werden, und kann auch ein Chipkarten-Lesegerät haben, in das jeder Fahrzeugführer vor Antritt der Fahrt eine ihn eindeutig identifizierende Chipkarte einzulegen hat.

In einer bevorzugten Ausführung sendet die RWE 10 beim Passieren der Wiegeschwelle über einen weiteren Transceiver 5 Kenndaten an den Lokalrechner 4. Diese Kenndaten umfassen beispielsweise das Fahrzeugkennzeichen und einen Fahrzeugcode, der den Fahrzeugtyp, Achsanzahl etc. kennzeichnet. Ist der Fahrzeugcode bekannt, so vereinfacht sich die Berechnung der zulässigen Achslast, zulässigen Achsgruppenlast etc. aufgrund der gemessenen Rad- und/oder Achslasten im Lokalrechner erheblich. Die Meßwerte müssen dann nur noch in vorgegebene Algorithmen eingesetzt werden. Auch die Rechengeschwindigkeit wird besser, weil nicht erst aufgrund der Messung ein bestimmter Fahrzeugtyp ermittelt werden muß.

Bei Überschreiten einer programmierbaren Toleranzschwelle für die Rad- oder Achslast steuert der Lokalrechner 4 den Transceiver 8 an, der seinerseits ein entsprechendes Funksignal an die RWE 10 im LKW 6 übermittelt. Mit dem übertragenen Signal wird auch eine Kennziffer geliefert, welche den Transceiver 8 und damit den Standort der Meßstelle sowie den Meßzeitpunkt eindeutig identifiziert. Der Transceiver 8 wird nur aktiviert, wenn eine Überschreitung der zulässigen Werte von der überfahrenen Wiegeschwelle 2 gemessen wurde.

Das Funksignal löst in der RWE 10 ein optisches und/oder akustisches Warnsignal aus. Beispielsweise leuchtet eine gelbe Lampe auf. Dieses Warnsignal kann von autorisiertem Personal, beispielsweise von Angestellten des Bundesamtes für Güterverkehr, wieder gelöscht werden, wenn die LKWs statisch, d.h. im Stand oder langsam dynamisch und damit eichfähig, gewogen werden. Ein solches Verwiegen geschieht in angemessenem Abstand von der Meßstelle an einer nachfolgenden Kontrollstation auf einem Autobahnparkplatz neben der Fahrstrecke, wobei es sich um eine mobile Kontrollstation handeln kann. Dort kann von dem autorisierten Personal entschieden werden, ob ein überladener LKW entladen werden muß oder unter Auflagen weiterfahren darf.

In einer bevorzugten Ausführung der Erfindung wird die RWE 10 so programmiert, daß das Warnsignal, beispielsweise die gelbe Lampe, während einer vordefinierten Zeitspanne aktiv ist und anschließend automatisch gelöscht wird. Diese Zeitspanne kann etwa eine bis fünf Stunden, insbesondere etwa drei Stunden betragen. Sie ist ausreichend lang, daß das Warnsignal nach wie vor aktiviert ist, wenn der markierte LKW die nächste und möglicherweise weitere Kontrollstationen passiert. Ferner sollte die Zeitspanne so lang gewählt sein, daß es für einen Fahrzeugführer nicht interessant ist, seine Fahrt zu unterbrechen und das Erlöschen des Warnsignals abzuwarten, bevor er die nächste Kontrollstation passiert. Das Warnsignal sollte jedoch innerhalb eines Zeitraumes erlöschen, in dem es wahrscheinlich ist, daß der LKW bei seinem Ziel angelangt ist und entladen wurde. Es kann auch vorgesehen sein, das Warnsignal nach Zurücklegen einer vorgegebenen Wegstrecke erlöschen zu lassen.

Das durch die Meßstation ausgelöste Warnsignal hat unabhängig davon, ob der LKW in einer nachfolgenden Station kontrolliert wird, den Effekt, den Fahrzeugführer auf einen vermuteten Überladungszustand hinzuweisen, so daß er entsprechende Maßnahmen treffen kann. Ferner dient das durch die Meßstation erzeugte Warnsignal der Auswertung in einer nachfolgenden Kontrollstation, wie unten näher beschrieben ist.

Darüber hinaus wird das Warnsignal im Datenspeicher der RWE mit Zeit- und Ortsangabe der initialen Warnmeldung dokumentiert und gegebenenfalls an einen Zentralrechner übermittelt. Dies kann bei wiederholter Auffälligkeit eines LKWs zu entsprechenden Konsequenzen für den Fahrzeugführer und -halter des LKWs führen.

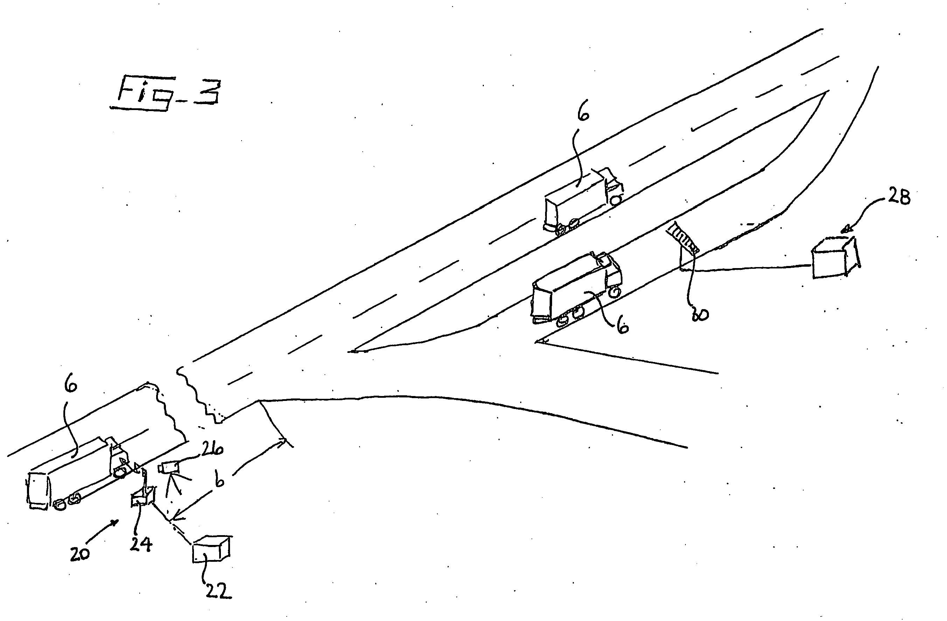

Fig. 3 zeigt eine Kontrollstation der erfindungsgemäßen Anlagen in perspektivischer Darstellung. Mit Abstand, z.B. 2 km vor der Kontrollstation ist eine mobile Kontrollstelle 20 eingerichtet, die einen weiteren Lokalrechner 22, eine Sende/Empfangs-Einheit (mobiler Transceiver) 24 und eine Blitzkamera 26 umfaßt. Die Sende/Empfangs-Einheit 24 erhält von der RWE 10 jedes sie passierenden LKW ein Statussignal, das den Markierungszustand der RWE angibt, und sendet dann, wenn die RWE 10 in einer vorangegangenen Meßstelle mit einem Warnsignal markiert wurde, ein zweites Markierungssignal, das in der RWE ein weiteres optisches und/oder akustisches Warnsignal auslöst. Beispielsweise leuchtet eine rote Lampe auf. Dieses Signal zeigt dem Fahrzeugführer an, daß er die nächstgelegene Kontrollstation anzufahren hat, die beispielsweise auf einem nachfolgenden Parkplatz ständig oder mobil installiert ist. Gleichzeitig werden die vorab an der Meßstelle markierten LKW 6 von der Blitzkamera 26 erfaßt.

Fahrzeugführer, denen die RWE ein entsprechendes Markierungssignal, beispielsweise ein rotes Licht anzeigt, müssen die Strecke verlassen und die nächstgelegene Kontrollstation 28 anfahren. Fahrzeuge, deren RWE lediglich das erste Markierungssignal, z.B. gelbes Licht, oder kein Markierungssignal, z.B. grünes Licht, anzeigt, dürfen die Kontrollstation 28 passieren.

Die Kontrollstation 28 befindet sich in einem geeigneten Abstand, beispielsweise ein bis zwei Kilometer hinter der Kontrollstelle 20, so daß jeder Fahrzeugführer ausreichend Zeit hat, auf das Warnsignal zu reagieren und von der Hauptstrecke abzubiegen. An der Kontrollstation 28 befindet sich eine eichfähige Wägestation 30, die ein geeichtes Wiegen der LKW 6 erlaubt. Das Ausführungsbeispiel zeigt eine langsam dynamische Wägung. Entsprechend der gewünschten Prüfschärfe werden vorhandene Parkplätze für eichfähige Messungen z.B. mit mobilen Trupps der BAG oder Polizei besetzt. Die Sende/Empfangs-Einheit 24 wird in geeignetem Abstand vor dem Parkplatz abhängig von der Kapazität der Kontrollstation 28 aktiviert. Es werden nur so viele der mit dem ersten Signal markierten LKW nochmals markiert, d.h. beispielsweise von gelbem auf rotes Warnlicht geschaltet, wie es die jeweilige Kapazität der Kontrollstation ermöglicht. Zu diesem Zweck kann die Sende/Empfangs-Einheit 24 so programmiert werden, daß sie nur eine gewünschte Anzahl von LKW von "gelb" auf "rot" schaltet. Erhält ein "gelber", voraussichtlich überladener LKW das Signal von der Sende/Empfangs-Einheit 24, wird seine RWE "rot" geschaltet und der Fahrzeugführer muß die Hauptstrecke verlassen, um den Wiegeplatz anzusteuern. Ein Ausfahren in den Parkplatz ist für den Fahrzeugführer ohne Beeinträchtigung des fließenden Verkehrs jederzeit möglich.

Zur Kontrolle wird jeder an der Kontrollstelle 20 markierte ("rote") LKW mit einer herkömmlichen Blitzkamera abgelichtet. Sollte der Fahrzeugführer der roten Signalisierung nicht Folge leisten, so kann er gleichwohl aufgrund der Erfassung mit der Blitzkamera 26 identifiziert und wegen Nichtbeachtung einer Verkehrsanweisung bestraft werden. Hierzu könnte auch das oben erwähnte Chipkarten-Lesegerät dienen. Folgt er der Anweisung, so wird er auf dem Parkplatz mit eichfähigen Waagen 30 überprüft.

Es ist auch möglich, den Zustand der Registrier- und Warneinheit über deren Transponder mit Hilfe von mobilen Überwachungsfahrzeugen, welche einen weiteren mobilen Transceiver enthalten, auszulesen. Ferner ist es möglich, in der Registrier- und Warneinheit gespeicherte Information für andere Zwecke zu nutzen, z.B. zur Unterscheidung von LKW nach Schadstoffklassen. Schließlich ist es auch möglich, daß die Registrier- und Warneinheit mit der an sich bekannten On-Board-Unit des Toll-Collect-Systems zusammenarbeitet, indem z.B. Gewichtsinformationen auch für eine differenzierte Maut-Erhebung verwendet wird. Vorzugsweise wird bei jeder Achslastmessung der zugehörige Meßzeitpunkt und Meßort gemeinsam mit den Fahrzeugdaten erfaßt und in der Registrier- und Warneinheit aufgezeichnet.

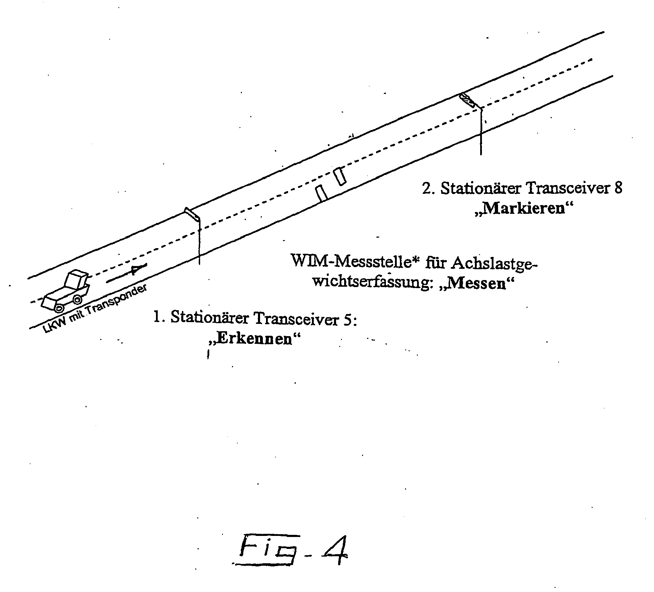

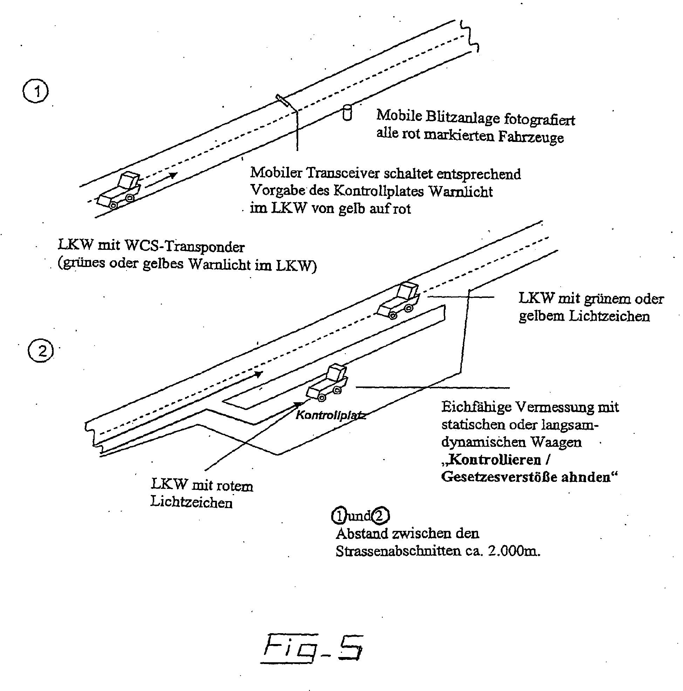

Zur Verdeutlichung des der Erfindung zugrundeliegenden Prinzips, bei dem zwei Subsysteme kombiniert werden, sind diese Subsysteme in den Figuren 4 und 5 nochmals schematisch dar-Das erfindungsgemäße Verfahren könnte erstmals das in den europäischen Verkehrsnetzen bestehende Problem lösen, ohne die hohen Infrastrukturinvestitionen für Wägestationen nach US-Standard eine nahezu lückenlose Überprüfung von LKW permanent auf Überladung zu ermöglichen. Das Verfahren kann 100 % der beispielsweise auf den Autobahnen fahrenden LKW kontrollieren und kommt mit den vorhandenen herkömmlichen Rastplätzen und ihren Beschilderung und Einfahrten aus. Erfindungsgemäß sollten hierzu bestimmte kommerzielle LKW-Klassen (z.B. ab 7,5 t oder ab 12 t Gesamtgewicht des Fahrzeuges) eine entsprechende RWE mit einem Transponder enthalten; die Kosten hierzu könnten deutlich niedriger als EUR 50,00 sein. Die LKW könnten beispielsweise bezogen auf die Bundesrepublik Deutschland bei normaler Geschwindigkeit an ca. 150 Meßstellen je Fahrspur, d.h. ca. alle 90 km, mit Hilfe der bekannten dynamischen Waagen permanent im fließenden Verkehr gewogen werden. Nur die als voraussichtlich überladen identifizierten LKW werden mit Mitteln der Nahbereich-Kommunikation, Kommunikations-Einheiten im 5,6 GHz-Bereich markiert, so daß die RWE in der Fahrerkabine ein Warnsignal, beispielsweise ein gelbes Licht, erzeugt. Dieses Licht erlischt automatisch nach einer vorgegebenen Zeit. Entsprechend der gewünschten Prüfschärfe können ferner die mit dem gelben Licht markierten LKW an fest installierten oder mobilen Kontrollstationen herausgepickt werden, indem kapazitätsabhängig so viele "gelbe" LKW auf rotes Warnlicht geschaltet werden, wie es die jeweilige Kapazität erlaubt.

Mit dem erfindungsgemäßen Verfahren ist sichergestellt, daß die ca. 10 % bis 20 % überladenen LKW - und nur diese - überprüft werden, und nicht auch die 80 % bis 90 % nicht überladenen LKW.

Das erfindungsgemäße Verfahren funktioniert bei sämtlichen Witterungen, auch bei Nebel und in Dunkelheit, ermöglicht also ein Erfassen und Ableiten überladener LKWs im 24-Stundenbetrieb.

Ferner schafft die Erfindung unabhängig von der Kontrolle vermutlich überladener LKW an Kontrollstationen ein Fahrerinformationssystem, das jeden registrierten LKW-Fahrer benachrichtigt, wenn sein Fahrzeug voraussichtlich überladen ist. Auch ohne daß jeder Meßstelle und/oder Kontrollstelle eine Kontrollstation folgt, ist zu erwarten, daß dies einen positiven Einfluß auf den Beladungszustand von Lastkraftwagen haben wird. Die Kontrollstationen können selektiv, unabhängig von den Meßstellen und Kontrollstellen eingerichtet werden.

Einfluß auf den Beladungszustand von Lastkraftwagen haben wird. Die Kontrollstationen können selektiv, unabhängig von den Meßstellen und Kontrollstellen eingerichtet werden.

Das Verfahren gemäß der Erfindung ermöglicht eine wirkungsvolle, flächendeckende Überladungskontrolle, die dank des vorgesehenen, nicht zu umgehenden Erkennungsmechanismus zu einem wesentlichen Rückgang an Überladungen führen dürfte. Das Verfahren nach der Erfindung erlaubt ein gezieltes Ableiten nur der tatsächlich überladenen LKWs für die vorgesehenen statischen Wägekontrollen und ferner an das Verkehrsaufkommen angepaßte Eingriffe, z.B. durch Aktivieren und Deaktivieren oder durch Änderung der Toleranzschwellen für die zulässigen Achslasten, so daß im Ergebnis der Verkehrsfluß signifikant weniger als bisher gestört wird.

Das Verfahren kann bei Integration in das Toll-Collect-System zu einem späteren Zeitpunkt auch zur differenzierten Maut-Berechnung je nach Beladezustand genutzt werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Verfahren zur Ermittlung und Überwachung des Beladungszustandes von Kraftfahrzeugen auf Verkehrswegen, an denen Meßstellen installiert sind, und zur fallweisen eichfähigen Nachwägung von überladenen Kraftfahrzeugen an einer Kontrollstation, wobei
- Rad- und/oder Achslasten der eine Meßstelle (4) passierenden Kraftfahrzeuge (6) gemessen werden,
- die Meßdaten im Falle einer Überschreitung zulässiger Werte in für Überladung repräsentative Signale umgewandelt werden,
- die betreffenden Kraftfahrzeuge (6) mit einem für den Fahrzeugführer wahrnehmbaren ersten optischen und/oder akustischen Signal markiert werden, das eine voraussichtliche Überladung anzeigt, **dadurch gekennzeichnet daß**,
- die markierten Kraftfahrzeuge (6) ein Kennungssignal an eine an der Hauptstrecke des Verkehrsweges befindliche Kontrollstelle (20) senden und an dieser Kontrollstelle mit einem zweiten, für den Fahrzeugführer wahrnehmbaren optischen und/oder akustischen Signal abhängig von dem Kennungssignal sowie der Aufnahmekapazität einer nächstgelegenen Kontrollstation (28) markiert werden, das dem Fahrzeugführer signalisiert, diese Kontrollstation (28) anzufahren.

2. Verfahren nach Anspruch 1, **dadurch gekennzeichnet, daß** von den Kraftfahrzeugen (6) Kenndaten an die Meßstelle übermittelt werden und die Rad- und/oder Achslast der Kraftfahrzeuge abhängig von den Kenndaten überprüft werden.

3. Verfahren nach Anspruch 2, **dadurch gekennzeichnet, daß** Meßdaten und fahrzeugspezifische Kenndaten kombiniert in den Kraftfahrzeugen gespeichert und/oder an einen Zentralrechner gesendet und gespeichert werden.

4. Verfahren nach Anspruch 2 oder 3, **dadurch gekennzeichnet, daß** die für Überladung repräsentativen Signale und fahrzeugspezifische Kenndaten an nahe den Verkehrswegen vorgesehene, den Meßstellen nachfolgende Kontrollstationen übermittelt werden.

5. Verfahren nach Anspruch 4, **dadurch gekennzeichnet, daß** die markierten Kraftfahrzeuge an der Kontrollstelle (20) fotografiert werden.

6. Verfahren nach Anspruch 5, **dadurch gekennzeichnet, daß** fährzeugspezifische Kenndaten der mit dem zweiten Signal markierten Kraftfahrzeuge an einen Zentralrechner gesendet werden.

7. Verfahren nach einem der vorangehenden Ansprüche, **dadurch gekennzeichnet, daß** die den betreffenden Kraftfahrzeugen zugeordneten Markierungen jeweils nach Ablauf einer vorgegebenen Zeitspanne oder Zurücklegen einer vorgegebenen Wegstrecke automatisch gelöscht werden.

8. Verfahren nach einem der Ansprüche 1 bis 7, **dadurch gekennzeichnet, daß** die den betreffenden Kraftfahrzeugen zugeordneten Markierungen jeweils nur von oder mit Genehmigung von befugtem Personal löschbar sind.

9. Verfahren nach einem der vorangehenden Ansprüche, **dadurch gekennzeichnet, daß** ein Toleranzpegel für die Überschreitung zulässiger Werte der Rad- und/oder Achslasten eingestellt werden kann.

10. Verfahren nach einem der vorangehenden Ansprüche, **dadurch gekennzeichnet, daß** die Messung der Rad- und/oder Achslasten der passierenden Kraftfahrzeuge durch Verwendung von Referenzachsen als Eichnormal nachgeeicht wird.

11. Verfahren nach einem der vorangehenden Ansprüche zur Verwendung auf mautpflichtigen Verkehrswegen an Meßstellen, denen Toll-Collect (TC)-Brücken zugeordnet sind, an denen Informationen bezüglich gezahlter Maut abgefragt und fahrzeugspezifische Daten, wie die polizeilichen Kennzeichen der eine TC-Brücke passierenden Kraftfahrzeuge erfaßt werden, wobei
- die Meßdaten und die fahrzeugspezifischen Daten fahrzeugbezogen kombiniert werden,
- die kombinierten Daten an einen Zentralrechner gesendet werden.

12. Verfahren nach Anspruch 11, **dadurch gekennzeichnet, daß** die Meßdaten und fahrzeugspezifischen Daten zur Maut-Berechnung herangezogen werden.

13. Verfahren nach einem der vorangehenden Ansprüche, **dadurch gekennzeichnet, daß** bei jeder Rad- und/oder Achslastmessung die zugehörigen Meßzeitpunkte erfaßt werden.

14. Verfahren nach einem der vorangehenden Ansprüche, **dadurch gekennzeichnet, daß** der Markierungs-Zustand und Kenndaten der Kraftfahrzeuge (6) von mobilen Kontrollfahrzeugen ausgelesen werden.

15. Verfahren nach einem der vorangehenden Ansprüche, **dadurch gekennzeichnet, daß** die Kontrollstelle der Meßstelle räumlich und zeitlich nachgeordnet ist, darüberhinaus jedoch räumlich und zeitlich unabhängig von der Meßstelle arbeitet.

16. Verfahren nach einem der Ansprüche 1 bis 15, **dadurch gekennzeichnet, daß** sämtliche Messungen und Signalübertragungen von Tageszeit und Witterung unabhängig durchgeführt werden.

17. Anlage zum Durchführen des Verfahrens nach einem der vorangehenden Ansprüche, umfassend:
- in die Fahrbahn des Verkehrsweges verlegte Wiegesensoren (2) zum Erfassen von Rad- und/oder Achslasten der die Meßstelle passierenden Kraftfahrzeuge (6);
- einen an jeder Meßstellen installierten Lokalrechner (4) zum Auswerten und Wandeln der Meßdaten in erste Markierungssignale,
- wenigstens eine an dem Verkehrsweg angeordnete, mit dem Lokalrechner (4) gekoppelte erste Kommunikations-Einrichtung (8) zum Senden der ersten Markierungssignale,
- eine in den Kraftfahrzeugen installierte Registrier- und Warn-Einheit (10) zum Aufzeichnen und Anzeigen der von der Kommunikations-Einrichtung (8) gesendeten Markierungssignale,
**dadurch gekennzeichnet daß,**
- eine an einer Kontrollstelle an dem Verkehrsweg angeordnete zweite Kommunikations-Einrichtung (24), die von der Registrier- und Warneinheit (10) ein Statussignal erhält und abhängig von dem Statussignal sowie abhängig von der Aufnahmekapazität einer nächstgelegenen Kontrollstation ein zweites Markierungssignal sendet, das dem Fahrer signalisiert, die nächstgelegene Kontrollstation anzufahren.

18. Anlage nach Anspruch 17, **dadurch gekennzeichnet, daß** die erste Kommunikations-Einrichtung einen Transceiver (8) aufweist, der mit Abstand (a) in Fahrtrichtung hinter der Meßstelle entlang des Verkehrsweges angeordnet ist, wobei der Abstand (a) so bemessen ist, daß die Zeitspanne zwischen Passieren eines Kraftfahrzeuges (6) vorbei an der Meßstelle und vorbei an dem Transceiver (8) zum Verarbeiten der Meßdaten im Lokalrechner (4) und Bilden und Senden der Signale zur Registrier- und Warn-Einheit (10) ausreicht.

19. Anlage nach Anspruch 18, **dadurch gekennzeichnet, daß** die erste Kommunikations-Einrichtung einen weiteren Transceiver (5) aufweist, der in Fahrtrichtung vor der Meßstelle angeordnet ist, um die Annäherung von Kraftfahrzeugen an die Meßstelle zu erfassen und die Kraftfahrzeuge zu erkennen.

20. Anlage nach einem der Ansprüche 17 bis 19, **dadurch gekennzeichnet, daß** die Registrier- und Warm-Einheit (10) ein Display mit einer oder mehreren optischen Anzeigelampen aufweist, welche im Falle eines Überladungszustandes über die Kommunikations-Einrichtung (8) aktiviert werden.

21. Anlage nach einem der Ansprüche 17 bis 20, **dadurch gekennzeichnet, daß** die Registrier- und Warneinheit (10) einen Transponder aufweist.

22. Anlage nach einem der Ansprüche 17 bis 21, **dadurch gekennzeichnet, daß** die Registrier- und Warn-Einheit (10) ein Lesegerät für eine Chipkarte zur Identifizierung des Fahrers enthält.

## Claims

1. Method for the assessment and monitoring of the load condition of motor vehicles on roadways, at which measuring sites are installed, and for the ad hoc certifiable re-weighing of over-loaded motor vehicles at a control station, wherein
- wheel and / or axle loads of motor vehicles (6) passing a measuring site (4) are measured,
- in case of exceeding admissible values, the measurement data are converted into signals representing an over-load,
- the motor vehicles in question (6) are flagged by setting off an initial visual and / or audible signal, perceivable to the driver, said signal indicating a possible overload,
**characterized in that**
- the flagged motor vehicles (6) transmit a characteristic signal to a control site (20) arranged at a main lane of the roadway and are flagged at said control site by a second visual and / or audible signal, perceivable to the driver and depending on the characteristic signal and on the capacity of a nearest control station (28), which lets the driver know that he should drive to the nearest control station (28).

2. Method according to claim 1, **characterized in that** characteristic data are transmitted from the motor vehicles (6) to the measuring site and the wheel and / or axle load of the motor vehicles are / is checked depending on the characteristic data.

3. Method according to claim 2, **characterized in that** measuring data and vehicle specific characteristic data are combined and recorded in the vehicles and / or sent to a central processor and stored.

4. Method according to claim 2 or 3, **characterized in that** the signals representing over-load and vehicle specific characteristic data are transmitted to control sites provided in proximity to the roadways and following the measuring sites.

5. Method according to claim 4, **characterized in that** the flagged motor vehicles are photographed at the control site (20).

6. Method according to claim 5, **characterized in that** vehicle specific characteristics of motor vehicles flagged with the second signal are transmitted to a central processor.

7. Method according to one of the above claims, **characterized in that** the flags assigned to the motor vehicles in question are each time automatically deleted after a predetermined time period or after a predetermined distance.

8. Method according to one of the claims 1 through 7, **characterized in that** the flags assigned to the motor vehicles in question can in each case only be deleted by or with the permission of authorized personnel.

9. Method according to one of the above claims, **characterized in that** a tolerance threshold for exceeding the acceptable range of the wheel and / or axle loads can be set.

10. Method according to one of the above claims, **characterized in that** the measuring of the wheel and / or axle loads of passing motor vehicles can be recertified through usage of reference axles as calibration norm.

11. Method according to one of the above claims for use on toll roads at measuring sites which have toll collect (TC) bridges assigned, at which information can be retrieved in regard to toll paid, and vehicle specific data like the license plates of motor vehicles passing a TC bridge can be recorded, wherein
- measuring data and vehicle specific data are combined per vehicle,
- the combined data are transmitted to a central processor.

12. Method according to claim 11, **characterized in that** measuring data and vehicle specific data are used for toll assessment.

13. Method according to one of the above claims, **characterized in that** at each wheel and / or axle measuring the corresponding measuring times are recorded.

14. Method according to one of the above claims, **characterized in that** the flagging condition and characteristics of motor vehicles (6) are polled by mobile control vehicles.

15. Method according to one of the above claims, **characterized in that** the control site is situated after the measuring site, both in regard to time and location, otherwise, however, works independently of the measuring site in regard to time and location.

16. Method according to one of claims 1 to 15, **characterized in that** the measurements and signal transmissions are performed independently of daytime and weather conditions.

17. System for conducting the method according to one of the above claims, comprising
- weighing sensors (2) installed in the roadway for recording wheel and / or axle loads of motor vehicles (6) passing the measuring site;
- a local processor (4) installed at each measuring site for evaluation and conversion of measuring data into first flagging signals;
- at least one first communication unit (8) located along the roadway and connected to the local processor (4) for transmitting the initial flagging signals,
- a logging and warning unit (10) installed in every motor vehicle for recording and displaying flagging signals transmitted by the communication unit (8),
**characterized in that**
- a second communication system (24) is provided at the control site at the roadway, which receives a status signal from the logging and warning unit (10) and, depending on the status signal and on the capacity of a nearest control station transmits a second flagging signal, which lets the driver know that he should drive to the nearest control station.

18. System according to claim 17, **characterized in that** the first communication unit has a transceiver (8), which is located along the road in driving direction some distance (a) past the measuring site, wherein said distance (a) is measured in such a way that the time period between passing the measuring site and subsequent passing of the transceiver (8) of a motor vehicle (6) is sufficient for processing the measuring data in the local processor (4) and creating and transmitting the signals to the logging and warning unit (10).

19. System according to claim 18, **characterized in that** the first communication unit has another transceiver (5), which is located in driving direction before the measuring site, to record motor vehicles approaching the measuring site and to identify them.

20. System according to one of the claims 17 through 19, **characterized in that** the logging and warning unit (10) has a display with one or more visual indicating lights which in case of an over-load condition are activated via the communication unit (8).

21. System according to one of the claims 17 through 20, **characterized in that the** logging and warning unit (10) is equipped with a transponder.

22. System according to one of the claims 17 through 21, **characterized in that** the logging and warning unit (10) contains a smart card reader for identifying the driver.

## Revendications

1. Procédé de détermination et de contrôle surveillance de l'état de charge de véhicules automobiles sur des voies de circulation dans lesquelles des points de mesure sont installés et le cas échéant de pesée postérieure admise à la vérification de véhicules en surcharge à une station de contrôle,
- les charges de roue et/ou d'essieu des véhicules automobiles (6) passant devant un point de mesure (4) étant mesurées,
- dans le cas d'un dépassement de valeurs admissibles, les données de mesure étant transformées en signaux représentatifs de la surcharge,
- les véhicules automobiles concernés (6) étant marqués à l'aide d'un premier signal optique et/ou acoustique perceptible par le conducteur du véhicule, qui affiche une surcharge vraisemblable,
**caractérisé en ce que**
- les véhicules automobiles marqués (6) envoient un signal d'identification à un poste de contrôle (20) se trouvant sur le tronçon principal de la voie de circulation et sont marqués à ce poste de contrôle d'un deuxième signal optique et/ou acoustique, perceptible par le conducteur du véhicule, qui est fonction du signal d'identification ainsi que de la capacité de rangement d'une station de contrôle (28) proche et signale au conducteur du véhicule d'aller à cette station de contrôle (28).

2. Procédé suivant la revendication 1, **caractérisé en ce que**, des données caractéristiques sont transmises par les véhicules automobiles (6) au point de mesure et **en ce que** la charge de roue et/ou d'essieu des véhicules automobiles est vérifiée en fonction des données caractéristiques.

3. Procédé suivant la revendication 2, **caractérisé en ce que** les données de mesure et les données caractéristiques spécifiques au véhicule sont mémorisées combinées dans les véhicules automobiles et/ou à un ordinateur central envoyées et mémorisées.

4. Procédé suivant la revendication 2 ou 3, **caractérisé en ce que** les signaux représentatifs de la surcharge et les données caractéristiques spécifiques au véhicule sont transmis aux stations de contrôle suivant les points de mesure, prévues à proximité des voies de circulation.

5. Procédé suivant la revendication 4, **caractérisé en ce que** les véhicules automobiles marqués sont photographiés au poste de contrôle (20).

6. Procédé suivant la revendication 5, **caractérisé en ce que** des données caractéristiques spécifiques au véhicule des véhicules marqués avec le deuxième signal sont envoyées à un ordinateur central.

7. Procédé suivant l'une des revendications précédentes, **caractérisé en ce que** les marquages affectés aux véhicules automobiles concernés sont automatiquement effacés à l'expiration d'une période de temps prédéfinie ou après le franchissement d'une distance prédéfinie.

8. Procédé suivant l'une des revendications 1 à 7, **caractérisé en ce que** les marquages affectés aux véhicules automobiles concernés peuvent être effacés respectivement uniquement par ou avec l'autorisation de personnel compétent.

9. Procédé suivant l'une des revendications précédentes, **caractérisé en ce qu'**un seuil de tolérance peut être réglé pour le dépassement de valeurs admissibles des charges de roue et/ou d'essieu.

10. Procédé suivant l'une des revendications précédentes, **caractérisé en ce que** la mesure des charges de roue et/ou d'essieu des véhicules automobiles qui passent est revérifiée par l'utilisation d'essieux de référence comme étalon de mesure.

11. Procédé suivant l'une des revendications précédentes pour l'utilisation sur des voies de circulation à péage à des points de mesure auxquels sont affectés des ponts Toll-Collect (TC), auxquels des informations concernant le péage payé sont demandées et des données spécifiques au véhicule, telles que la plaque d'immatriculation, sont saisies pour les véhicules passant en dessous d'un pont TC,
- les données de mesure et les données spécifiques au véhicule étant combinées avec référence au véhicule,
- les données combinées étant envoyées à un ordinateur central.

12. Procédé suivant la revendication 11, **caractérisé en ce que** les données de mesure et les données spécifiques au véhicule sont utilisées pour le calcul du péage.

13. Procédé suivant l'une des revendications précédentes, **caractérisé en ce que** les moments de mesure correspondants sont saisis à chaque mesure de charge de roue et/ou d'essieu.

14. Procédé suivant l'une des revendications précédentes, **caractérisé en ce que** l'état de marquage et les données caractéristiques des véhicules automobiles (6) sont lus par des véhicules de contrôle mobiles.

15. Procédé suivant l'une des revendications précédentes, **caractérisé en ce que** le poste de contrôle est situé spatialement et temporellement en aval du point de mesure, fonctionne cependant en outre spatialement et temporellement indépendamment du point de mesure.

16. Procédé suivant l'une des revendications 1 à 15, **caractérisé en ce que** toutes les mesures et transmissions de signaux sont exécutées indépendamment de l'heure du jour et des conditions météorologiques.

17. Installation d'exécution du procédé suivant l'une des revendications précédentes, comprenant:
- des capteurs de pesée (2) incorporés dans la voie de roulement de la voie de circulation pour la saisie des charges de roue et/ou d'essieu des véhicules automobiles (6) passant au point de mesure;
- un ordinateur local (4) installé à chaque point de mesure pour l'interprétation et la conversion des données de mesure en premiers signaux de marquage,
- au moins un premier dispositif de communication (8) disposé à la voie de circulation et couplé à l'ordinateur local (4) pour l'envoi des premiers signaux de marquage,
- une unité d'enregistrement et d'avertissement (10) installée dans les véhicules automobiles pour enregistrer et afficher les signaux de marquage envoyés par le dispositif de communication (8),
**caractérisée en ce que**
un deuxième dispositif de communication (24) disposé à un poste de contrôle le long de la voie de circulation reçoit un signal d'état de l'unité d'enregistrement et d'avertissement (10) et, en fonction du signal d'état ainsi qu'en fonction de la capacité de rangement d'une station de contrôle proche, envoie un deuxième signal de marquage, qui signale au conducteur d'aller à la station de contrôle la plus proche.

18. Installation suivant la revendication 17, **caractérisée en ce que** le premier dispositif de communication présente un récepteur-émetteur (8) qui est disposé le long de la voie de circulation à une distance (a) derrière le point de mesure dans le sens de la marche, la distance (a) étant dimensionnée de telle façon que l'intervalle de temps entre le passage d'un véhicule automobile (6) au point de mesure et près du récepteur-émetteur (8) suffit pour traiter les données de mesure dans l'ordinateur local (4) et la formation et l'envoi des signaux à l'unité d'enregistrement et d'avertissement (10).

19. Installation suivant la revendication 18, **caractérisée en ce que** le premier dispositif de communication présente un récepteur-émetteur (5) supplémentaire, qui est disposé devant le point de mesure dans le sens de la marche, afin de détecter l'approche de véhicules automobiles au point de mesure et de reconnaître les véhicules automobiles.

20. Installation suivant l'une des revendications 17 à 19, **caractérisée en ce que** l'unité d'enregistrement et d'avertissement (10) présente un écran avec une ou plusieurs lampes témoins optiques, qui sont activées via le dispositif de communication (8) en cas d'état de surcharge.

21. Installation suivant l'une des revendications 17 à 20, **caractérisée en ce que** l'unité d'enregistrement et d'avertissement (10) présente un transpondeur.

22. Installation suivant l'une des revendications 17 à 21, **caractérisée en ce que** l'unité d'enregistrement et d'avertissement (10) comporte un lecteur pour une carte à puce d'identification du conducteur.
